# EUROPEAN PATENT SPECIFICATION

(11) **EP 2 998 878 B1**
(45) Date of publication and mention of the grant of the patent: **10.07.2019**
(21) Application number: 14004433.0
(22) Date of filing: 29.12.2014
(51) Int. Cl.: G06F 17/24, G06F 3/0484, G06K 9/20, G06F 3/0488

(54) **MOBILE TERMINAL AND METHOD OF CONTROLLING THEREFOR**
Mobiles Endgerät und Betriebsverfahren dafür
Terminal mobile et procédé de commande associé

(30) Priority: 16.09.2014 KR 20140122614
(43) Date of publication of application: 23.03.2016
(73) Proprietor: LG Electronics Inc., Yeongdeungpo-gu Seoul 150-721 (KR)
(72) Inventor: Hur, Kyungwoo, 137-893 Seoul (KR)
(74) Representative: Beyer, Andreas

(56) References cited:
- US-A1- 2006 004 835
- US-A1- 2013 014 054
- US-A1- 2013 019 169
- US-A1- 2014 207 453

## Description

### BACKGROUND OF THE INVENTION

### Field of the Invention

The present invention relates to a mobile terminal and a method of controlling therefor. For instance, the present invention is applicable to a technology that processes a specific text on a clipboard using the mobile terminal.

### Discussion of the Related Art

A terminal can be classified into a mobile/portable terminal and a stationary terminal. Again, the mobile terminal can be divided into a handheld (type) terminal and a vehicle mounted terminal. A function of a mobile terminal is diversifying. For instance, the function of the mobile terminal includes data and audio communication, capturing a picture and a video using a camera, audio recording, playing a music file using a speaker system and outputting an image or a video on a display unit. Some terminals may have an additional function such as playing an electronic game or performing a function of a multimedia player. In particular, a latest mobile terminal can receive a multicast signal providing such visual contents as a broadcast, a video and a television program.

Moreover, a clipboard function has been applied to most terminals. For instance, a clipboard is a memory area which is secured as a temporary storing space when copying or pasting data from one program to another program. Yet, the clipboard function is limited and inconvenient to the user.

US 2014/207453 A1 discloses a method of editing voice recognition results in a touch screen portable device. The method includes a process of converting the voice recognition results into text and displaying the text in a touch screen. The text is then edited on the touch screen by a user based on gestures.

US 2013/019169 A1 discloses a method for word correction on a touch screen portable device. A word is displayed and broken up into logical segments. The user can then select and edit the segments individually.

US 2013/014054 A1 refers to a method and an apparatus for editing text in a mobile terminal. In this regard, a mobile terminal capable of allowing a user to edit text by selecting multiple text portions in a text-editing process of the mobile terminal is provided. In a step, it is determined that a specified area on a display of the mobile terminal is touched for a specific period of time or more while a text is displayed on the display. In another step, a controller of the mobile terminal controls to display an edit menu including a copy menu item and a paste menu item if the specific area is touched for at least the specific period of time. When the copy menu item is selected, the controller activates a copying process. Specifically, when a specific area comprising text is touched in another step, the edit icon and a cursor are displayed on the display. After a specific time has elapsed after the edit icon and the cursor were located on a text to be copied, the edit icon is changed to a copy icon. When a text is selected, said text is highlighted. If the specific area is touched again, the controller returns to the previous steps. Accordingly, by repeating said procedure, the user may select several text portions among the displayed text. Accordingly, there is defined a pasting process, wherein the user can select which text is to be pasted based on a displayed list of the previously selected copied text portions.

US 2006/004835 A1 provides a standard text method, system, and program product for configuring blocks of text and for defining the circumstances under which the blocks of text are to be displayed to users by multiple applications. The method comprises: providing a block of text to be published; selecting at least one application that will use the block of text; defining at least one business entity to which the block of text pertains; defining criteria under which the block of text will be used by each selected application; and repeating the above steps for each additional block of text to be published.

### SUMMARY OF THE INVENTION

Accordingly, one aspect of the present invention is directed to an apparatus and method thereof that substantially obviate one or more problems due to limitations and disadvantages of the related art.

According aspect of the present invention is to provide a mobile terminal capable of setting a plurality of text blocks on a clipboard at a time.

Yet another aspect of the present invention is to define a technology capable of more promptly processing a plurality of blocks.

Another aspect of the present invention is to provide a GUI (graphic user interface) capable of easily editing and rearranging a plurality of selected blocks.

Still another aspect of the present invention is to provide a technology capable of limitedly loading a block including a specific text only in a specific mode (e.g., application).

To achieve these objects and other advantages and in accordance with the purpose of the invention, as embodied and broadly described herein, according to one embodiment, the present invention provides a method according to claim 1 and a mobile terminal according to claim 9.

An additional scope to which the present invention is applicable is to be clearly understood by following detail explanation. Yet, since various changes and modifications within the scope of the present invention can be clearly understood by those skilled in the art, detailed explanation and such a specific embodiment of the present invention should be understood as just a given example.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIG. 1A is a block diagram of a mobile terminal according to an embodiment of the present invention;
FIGS. 1B and 1C are conceptual views of one example of the mobile terminal, viewed from different directions;
FIG. 2 is a conceptual view of a deformable mobile terminal according to an alternative embodiment of the present invention;
FIG. 3 is a conceptual view of a wearable mobile terminal according to another alternative embodiment of the present invention;
FIG. 4 is a conceptual view of a wearable mobile terminal according to another alternative embodiment of the present invention;
FIG. 5 is a block diagram illustrating configuration elements of a mobile terminal according to one embodiment of the present invention;
FIG. 6 and FIG. 7 are diagrams illustrating an example of setting a plurality of text blocks using a mobile terminal according to one embodiment of the present invention;
FIG. 8 to FIG. 10 are diagrams illustrating a different example of setting a plurality of text blocks using a mobile terminal according to one embodiment of the present invention;
FIG. 11 is a diagram illustrating a further different example of setting a plurality of text blocks using a mobile terminal according to one embodiment of the present invention;
FIG. 12 is a diagram illustrating an example of copying a plurality of predetermined text blocks using a mobile terminal according to one embodiment of the present invention;
FIG. 13 is a diagram illustrating an example of cancelling a plurality of predetermined text blocks using a mobile terminal according to one embodiment of the present invention;
FIG. 14 is a diagram illustrating a different example of cancelling a plurality of predetermined text blocks using a mobile terminal according to one embodiment of the present invention;
FIG. 15 is a diagram illustrating an example of merging a plurality of predetermined text blocks with each other using a mobile terminal according to one embodiment of the present invention;
FIG. 16 is a diagram illustrating a different example of merging a plurality of predetermined text blocks with each other using a mobile terminal according to one embodiment of the present invention;
FIG. 17 is a diagram illustrating an example of editing a text in a clipboard using a mobile terminal according to one embodiment of the present invention;
FIG. 18 is a diagram illustrating an example of setting a text block using the third sensing technology using a mobile terminal according to one embodiment of the present invention;
FIG. 19 is a diagram illustrating a different example of setting a text block using the third sensing technology using a mobile terminal according to one embodiment of the present invention;
FIG. 20 is a diagram illustrating a further different example of setting a text block using the third sensing technology using a mobile terminal according to one embodiment of the present invention;
FIG. 21 is a diagram illustrating an example of a process of copying a plurality of text blocks to a clipboard using a mobile terminal according to one embodiment of the present invention;
FIG. 22 is a diagram illustrating a different example of a process of copying a plurality of text blocks to a clipboard using a mobile terminal according to one embodiment of the present invention;
FIG. 23 is a diagram illustrating an example of a process of merging a text block with a text previously stored in a clipboard using a mobile terminal according to one embodiment of the present invention;
FIG. 24 is a diagram illustrating an example of a process of merging text stored in a clipboard with each other using a mobile terminal according to one embodiment of the present invention;
FIG. 25 is a diagram illustrating a different example of a process of merging text stored in a clipboard with each other using a mobile terminal according to one embodiment of the present invention;
FIG. 26 is a diagram illustrating explaining a technology selectively providing a part of text only among the text stored in a clipboard according to a predetermined mode (or application) using a mobile terminal according to one embodiment of the present invention;
FIGS. 27 to 30 are diagrams illustrating embodiments that implement the technology explained in FIG. 26;
FIG. 31 is a diagram illustrating database necessary for implementing the technology explained in FIG. 26; and
FIG. 32 is a flowchart illustrating a method of controlling a mobile terminal according to one embodiment of the present invention.

### DETAILED DESCRIPTION OF THE INVENTION

Description will now be given in detail according to embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function.

The accompanying drawings are used to help easily understand various technical features and the embodiments presented herein are not limited by the accompanying drawings. As such, the present invention should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like. By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

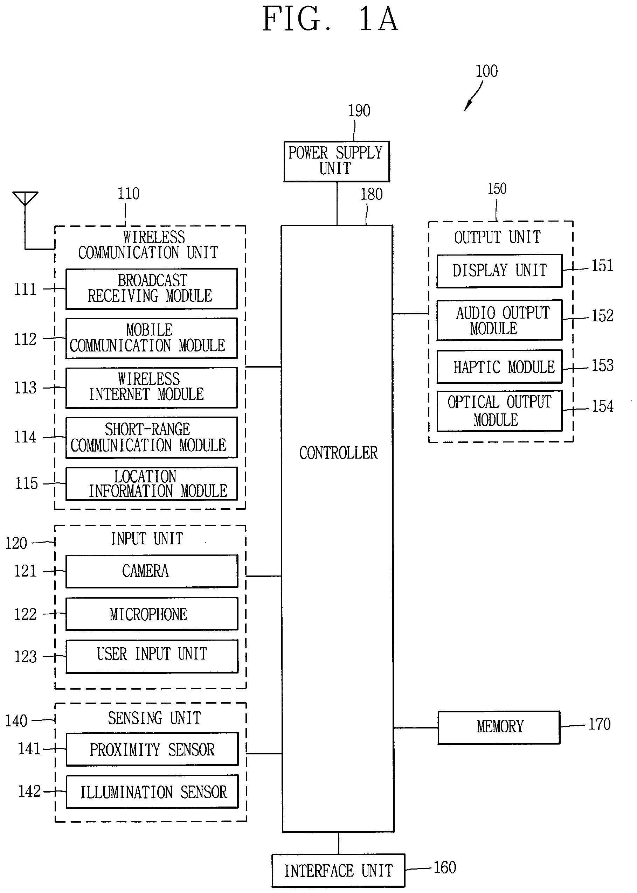

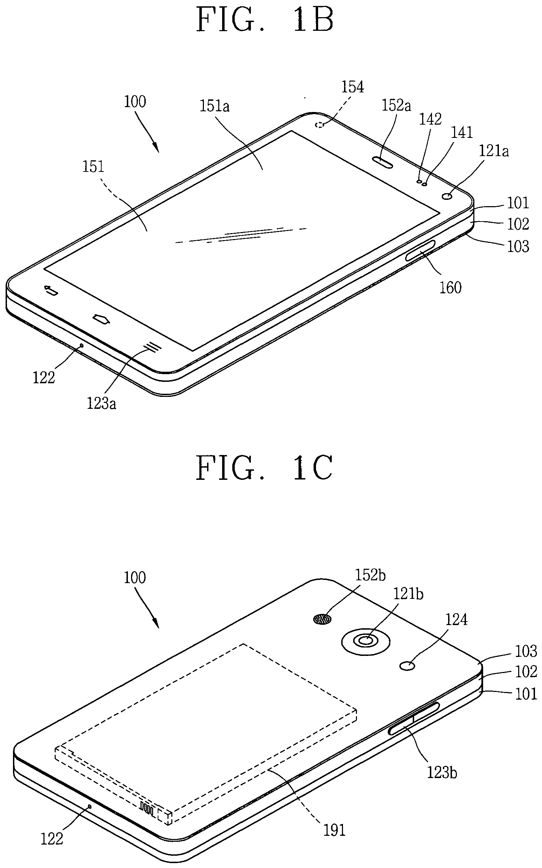

Reference is now made to FIGS. 1A-1C, where FIG. 1A is a block diagram of a mobile terminal in accordance with the present invention, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server a network within which another mobile terminal (or an external server) is located, and combinations thereof. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this instance, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WibroWiBro), Worldwide Interoperability for Microwave Access (WimaxWiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WibroWiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless personal area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field or, infrared rays, or the like without a mechanical contact. The proximity sensor 141 may be arranged at an inner region of the mobile terminal covered by the touch screen, or near the touch screen. The proximity sensor 141 generally has a longer lifespan and enhanced utility, as compared to a typical contact sensor.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like. If desired, an ultrasonic sensor may be implemented to recognize position information relating to a touch object using ultrasonic waves.

The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. The camera 121 may be implemented using any of an assortment of camera or image sensors. Typical sensors include a photo sensor and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b. The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant invention. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170. The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

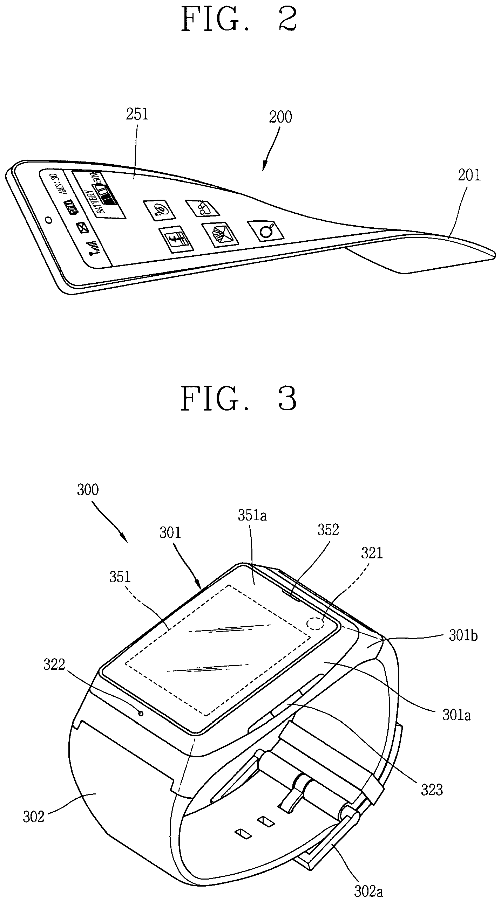

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C .

The flexible display of mobile terminal 200 is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 251 is not deformed (for example, in a state with an infinite radius of curvature and referred to as a first state), a display region of the flexible display unit 251 includes a generally flat surface. When the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states. One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor. The mobile terminal 200 is shown having a case 201 for accommodating the flexible display unit 251. The case 201 can be deformable together with the flexible display unit 251, taking into account the characteristics of the flexible display unit 251.

A battery located in the mobile terminal 200 may also be deformable in cooperation with the flexible display unit 261, taking into account the characteristic of the flexible display unit 251. One technique to implement such a battery is to use a stack and folding method of stacking battery cells. The deformation of the flexible display unit 251 not limited to perform by an external force. For example, the flexible display unit 251 can be deformed into the second state from the first state by a user command, application command, or the like.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 can transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGS. 1A-1C .

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion electrically connected to the antenna to extend a ground area. The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

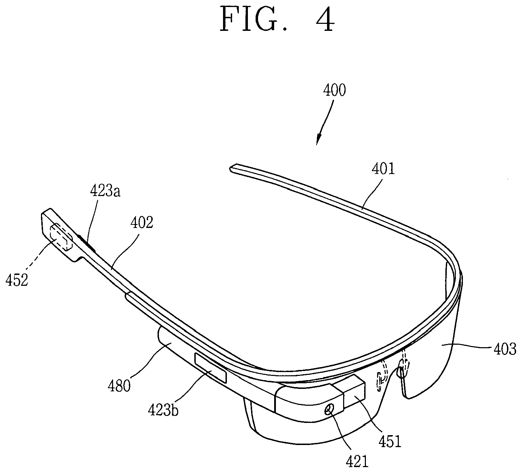

FIG. 4 is a perspective view illustrating one example of a glass-type mobile terminal 400 according to another embodiment. The glass-type mobile terminal 400 can be wearable on a head of a human body and provided with a frame (case, housing, etc.) therefor. The frame may be made of a flexible material to be easily worn. The frame of mobile terminal 400 is shown having a first frame 401 and a second frame 402, which can be made of the same or different materials. In general, mobile terminal 400 may be configured to include features that are the same or similar to that of mobile terminal 100 of FIGS. 1A-1C.

The frame may be supported on the head and defines a space for mounting various components. As illustrated, electronic components, such as a control module 480, an audio output module 452, and the like, may be mounted to the frame part. Also, a lens 403 for covering either or both of the left and right eyes may be detachably coupled to the frame part.

The control module 480 controls various electronic components disposed in the mobile terminal 400. The control module 480 may be understood as a component corresponding to the aforementioned controller 180. FIG. 4 illustrates that the control module 480 is installed in the frame part on one side of the head, but other locations are possible.

The display unit 451 may be implemented as a head mounted display (HMD). The HMD refers to display techniques by which a display is mounted to a head to show an image directly in front of a user's eyes. In order to provide an image directly in front of the user's eyes when the user wears the glass-type mobile terminal 400, the display unit 451 may be located to correspond to either or both of the left and right eyes. FIG. 4 illustrates that the display unit 451 is located on a portion corresponding to the right eye to output an image viewable by the user's right eye.

The display unit 451 may project an image into the user's eye using a prism. Also, the prism may be formed from optically transparent material such that the user can view both the projected image and a general visual field (a range that the user views through the eyes) in front of the user. In such a manner, the image output through the display unit 451 may be viewed while overlapping with the general visual field. The mobile terminal 400 may provide an augmented reality (AR) by overlaying a virtual image on a realistic image or background using the display.

The camera 421 may be located adjacent to either or both of the left and right eyes to capture an image. Since the camera 421 is located adjacent to the eye, the camera 421 can acquire a scene that the user is currently viewing. The camera 421 may be positioned at most any location of the mobile terminal. In some embodiments, multiple cameras 421 may be utilized. Such multiple cameras 421 may be used to acquire a stereoscopic image.

The glass-type mobile terminal 400 may include user input units 423a and 423b, which can each be manipulated by the user to provide an input. The user input units 423a and 423b may employ techniques which permit input via a tactile input. Typical tactile inputs include a touch, push, or the like. The user input units 423a and 423b are shown operable in a pushing manner and a touching manner as they are located on the frame part and the control module 480, respectively.

If desired, mobile terminal 400 may include a microphone which processes input sound into electric audio data, and an audio output module 452 for outputting audio. The audio output module 452 may be configured to produce audio in a general audio output manner or an osteoconductive manner. When the audio output module 452 is implemented in the osteoconductive manner, the audio output module 452 may be closely adhered to the head when the user wears the mobile terminal 400 and vibrate the user's skull to transfer sounds.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A(Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omnidirectional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites. A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module. The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database. A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, or Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter. In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

When the NFC module operates in a card mode, the mobile terminal may transmit card information on a general IC card to the outside. More specifically, if a mobile terminal having card information on a payment card (e.g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this instance, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

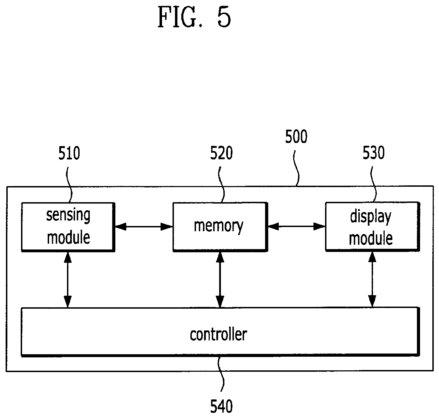

Next, FIG. 5 is a block diagram illustrating configuration elements of a mobile terminal according to one embodiment of the present invention. The mobile terminal shown in FIG. 5 can be complementally interpreted with reference to the mobile terminal mentioned earlier with reference to FIG. 1 to FIG. 4. For instance, deleting/changing a part of blocks shown in FIG. 5 or adding a part of blocks shown in FIG. 1 to FIG. 4 to FIG. 5 also belongs to the scope of right of the present invention.

As shown in FIG. 5, a mobile terminal 500 according to one embodiment of the present invention includes a sensing module 510, a memory 520, a display module 530, a controller 540 and the like. For instance, the sensing module 510 shown in FIG. 5 corresponds to a sensing unit 140 shown in FIG. 1, the memory 520 shown in FIG. 5 corresponds to a memory 170 shown in FIG. 1, the display module 530 shown in FIG. 5 corresponds to an output unit 150 shown in FIG. 1 and the controller 540 shown in FIG. 5 corresponds to a controller 180 shown in FIG. 1.

The display module 530 outputs a screen including at least one or more text. The sensing module 510 receives a first command configured to copy the at least one or more text of the screen and receives a second command configured to divide text to be copied into a plurality of blocks. The memory 520 stores a plurality of the divided blocks based on at least one of a position of the received second command and a direction of the second command. The controller 540 controls at least one or more blocks among a plurality of the blocks to be output on the screen in a predetermined mode.

According to a different embodiment of the present invention, the sensing module 510 is configured to recognize a dragged position and a dragged direction of the received second command and identify a plurality of blocks on the basis of the recognized position. Moreover, if the first command is received, the controller 540 is configured to highlight a single block including at least one or more text and respectively display a plurality of indicators indicating a start point and an end point of the highlighted single block, respectively, by controlling the display module 530.

According to a further different embodiment of the present invention, if the sensing module 510 recognizes that one of a plurality of the indicators is touched for more than a predetermined time, the controller 540 controls a plurality of blocks adjacent to a first block according to the first command to be displayed in a list form and controls a specific block among a plurality of the blocks to be selected as a second block based on the second command. Or, the controller 540 controls a plurality of the blocks adjacent to the first block according to the first command to be displayed in a highlighted form and controls a specific block among a plurality of the blocks to be selected as a second block based on the second command.

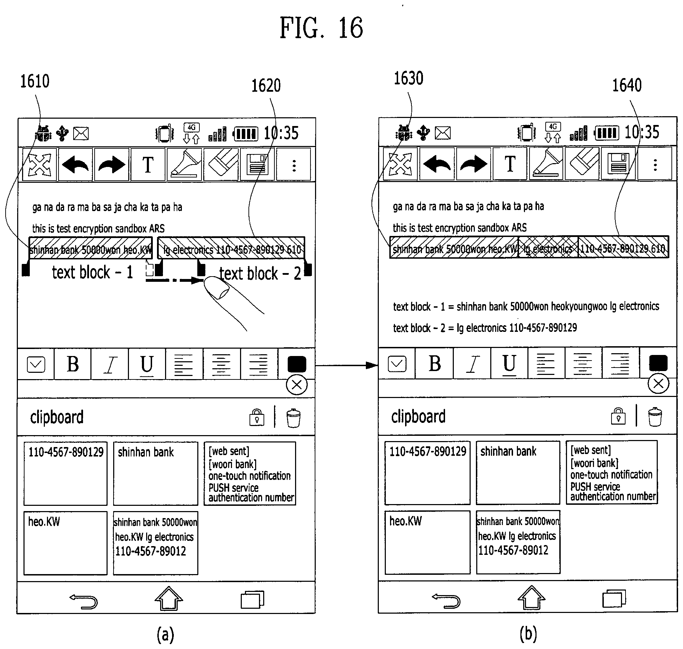

For instance, the sensing module 510 receives a third command configured to make a part of text included in the first block to be included in the second block and the memory 520 respectively stores the first block and the second block that share a part of the text with each other. Regarding this, it shall be described in detail with reference to FIG. 16.

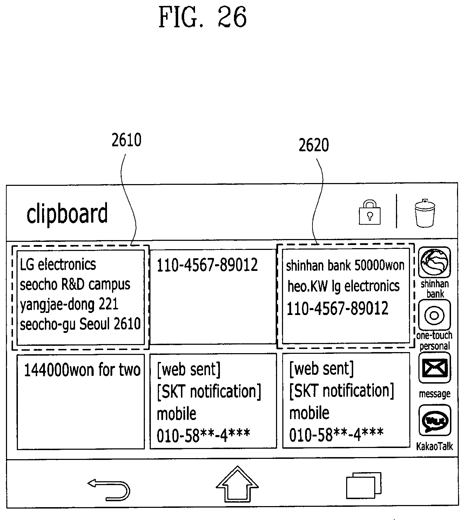

The controller 540 executes a mode configured to edit a plurality of the blocks and controls all blocks stored in the memory 520 to be recognized as one block and displayed. Or, the controller controls all blocks stored in the memory to be individually recognized and displayed. The controller 540 analyzes a currently executed mode and text included in the blocks stored in the memory. The controller controls blocks including a text, which is mapped to the analyzed mode, to be displayed only or controls the blocks to be preferentially displayed according to a result of the analysis. Regarding this, it shall be described later with reference to FIG. 26 to FIG. 31. The received first command is determined by a palm touch for example. The received second command is determined by a nail touch for example.

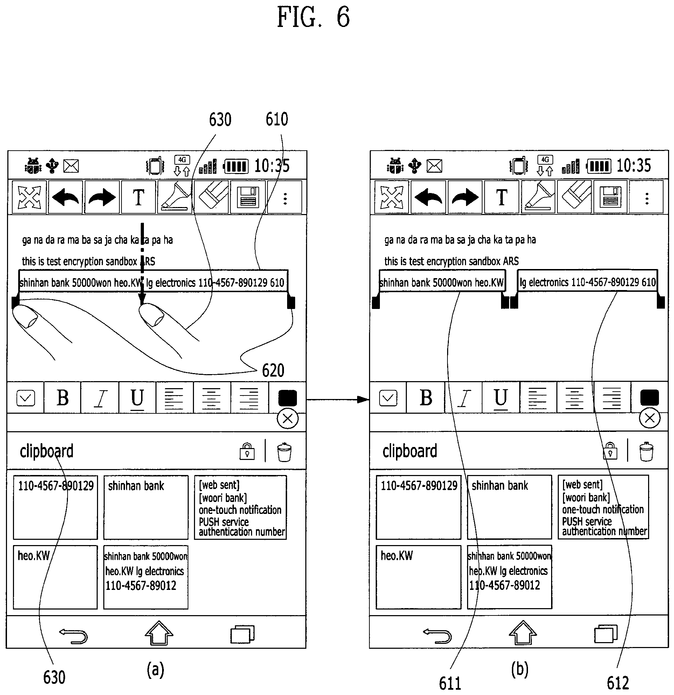

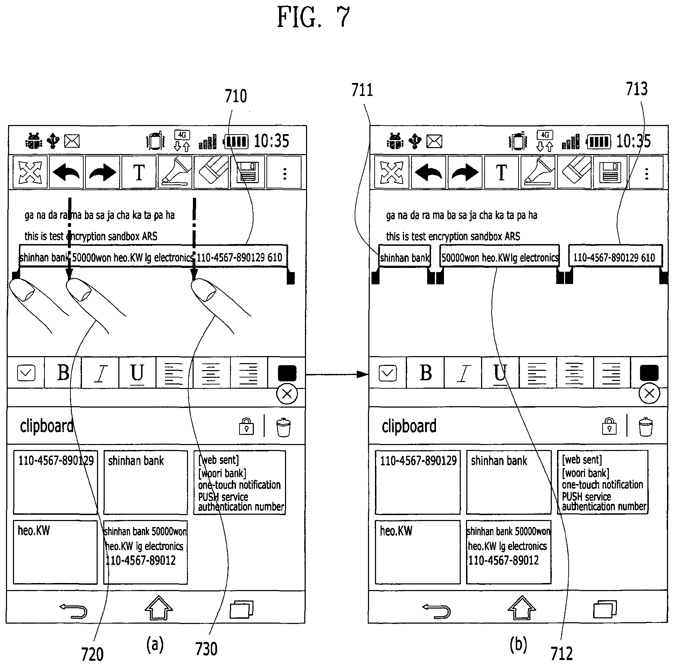

Next, FIG. 6 and FIG. 7 are diagrams illustrating an example of setting a plurality of text blocks using a mobile terminal according to one embodiment of the present invention. As shown in FIG. 6 (a), assume that a block 610 including at least one or more text is output. In this instance, if an indicator 620 indicating a start point and an end point of the block 610 is clicked for more than a predetermined time, a legacy screen is stopped and the screen is switched to an edit mode. According to the related art, although a size of the block 610 is controllable using the indicator 620, it is impossible to divide the block 610.

On the contrary, according to one embodiment of the present invention, as shown in FIG. 6 (b), if a random point of the block 610 is dragged 630 in a down direction in the edit mode, the block 610 is divided into two blocks 611/612. The divided blocks 611/612 are automatically stored in a clipboard 630 or stored by a different command described later.

In FIG. 6, a process of dividing a block into two blocks has been explained. On the contrary, in FIG. 7, a process of dividing a block into three blocks is explained. As shown in FIG. 7 (a), assume that there exists a single text block 710. In this instance, if an indicator indicating a start point of the block 710 is clicked (long click) for more than a prescribed time, a legacy screen is stopped and the screen is switched to an edit mode. A currently set block 710 can be modified or edited after the screen is switched to the edit mode. In the edit mode, dragging 720/730 in a down direction is performed on points where a user wants to divide the text block 710. Hence, as shown in FIG. 7 (b), an initial one block is divided into a first block 711, a second block 712 and a third block 713. On the contrary, according to a related art, there is a limit in that a text block to be copied or used in a clipboard can be modified in size only. Yet, according to one embodiment of the present invention, it can more easily and promptly divide a text block.

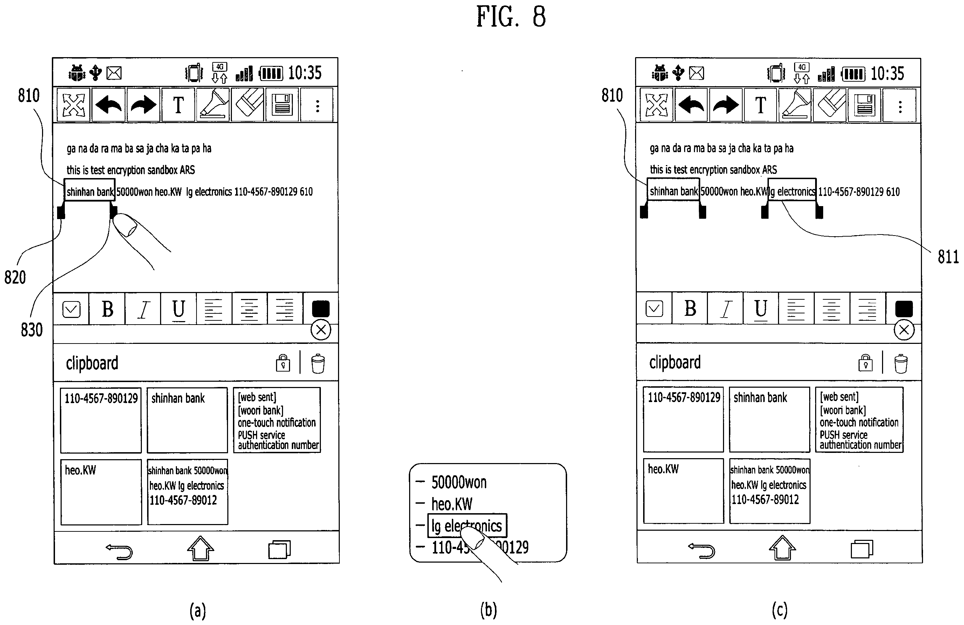

Next, FIG. 8 to FIG. 10 are diagrams illustrating a different example of setting a plurality of text blocks using a mobile terminal according to one embodiment of the present invention. Unlike FIG. 6 and FIG. 7, FIG. 8 to FIG. 10 show examples that a user does not need to manually drag a point where the user wants to divide.

As shown in FIG. 8 (a), if one of indicators 820/830 indicating a start point and an end point of a currently set text block 810 is clicked for more than a predetermined time, as shown in FIG. 8 (b), recommended blocks among text positioned at a latter part of the text block 810 are displayed in a list form. In FIG. 8 (b), assume that a user selects such a text as "Ig electronics." Meanwhile, if the indicator 830 indicating the end point of the text block is selected, text positioned at the latter part of the predetermined text block are recommended only. This also corresponds to a different characteristic of the present invention. Hence, as shown in FIG. 8 (c), both the legacy text block 810 and a newly selected text block 811 are highlighted and a user can use the two text blocks for a different program in the future.

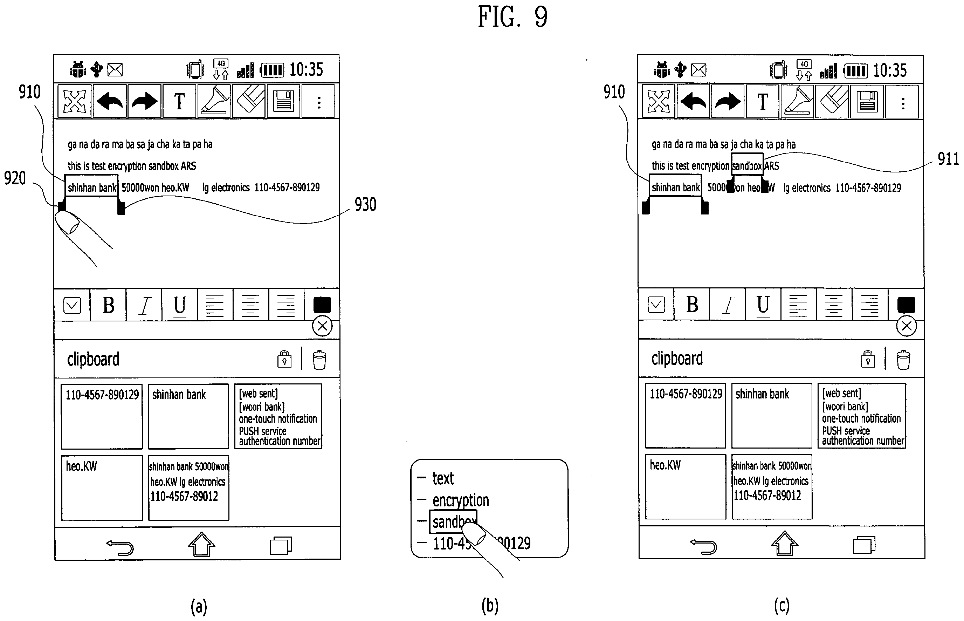

As shown in FIG. 9 (a), if one of indicators 920/930 indicating a start point and an end point of a currently set text block 910 is clicked for more than a predetermined time, as shown in FIG. 9 (b), recommended blocks among text positioned at a latter part of the text block 910 are displayed in a list form. In FIG. 9 (b), assume that a user selects such a text as "sandbox." Meanwhile, if the indicator 920 indicating the start point of the text block is selected, text positioned at the fore part of the predetermined text block are recommended only. This also corresponds to a different characteristic of the present invention. Hence, as shown in FIG. 9 (c), both the legacy text block 910 and a newly selected text block 911 are highlighted and a user can use the two text blocks for a different program in the future.

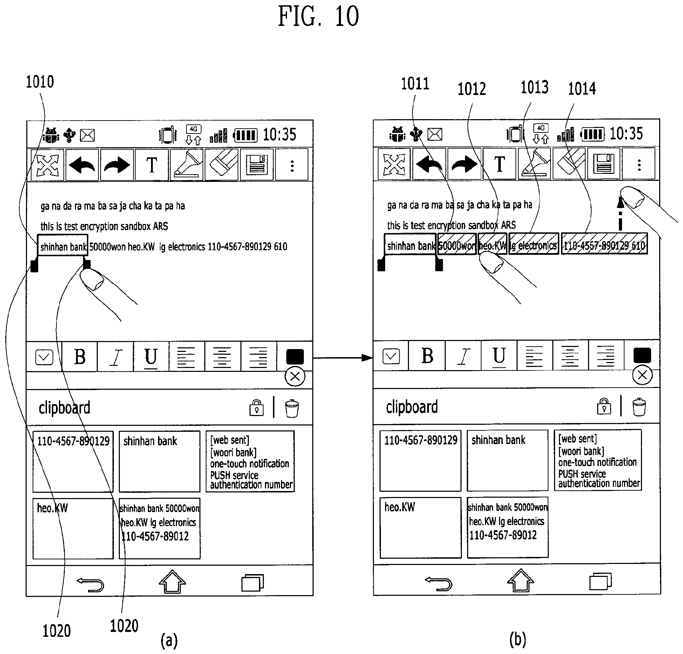

Unlike FIG. 8 and FIG. 9, FIG. 10 shows an example that recommended text blocks are displayed in a highlight form instead of a list format. If the recommended text blocks are designed to be displayed in the highlight form instead of the list form, it is not necessary to separately generate a list-related graphic image. As shown in FIG. 10 (a), if one of indicators 1020/1030 indicating a start point and an end point of a currently set text block 1010 is clicked for more than a predetermined time, a mode is switched to an edit mode. In particular, in FIG. 10 (a), assume that a user clicks (long click) the indicator 1020 indicating the end point of the text block.

Hence, as shown in FIG. 10 (b), text blocks 1011/1012/1013/1014 positioned at the latter part of the predetermined text block 1010 are highlighted and displayed. If a user selects one of the highlighted text blocks 1011/1012/1013/1014, the selected text block is automatically stored in a clipboard or is simply copied. Of course, if a user drags an unwanted block among the highlighted text blocks in up direction, the unwanted block is cancelled (i.e., highlight of the unwanted block is not displayed anymore).

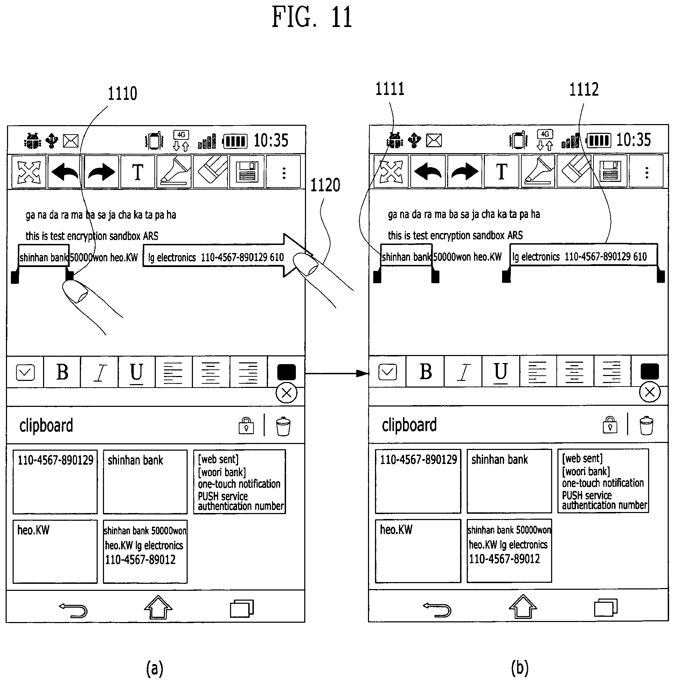

FIG. 11 is a diagram illustrating a further different example of setting a plurality of text blocks using a mobile terminal according to one embodiment of the present invention. As shown in FIG. 11 (a), among indicators indicating a start point and an end point of a predetermined block, if a user clicks (long click) an indicator 1110 indicating the end point of the predetermined block for more than a predetermined time, a mode is switched to an edit mode. After the mode is switched to the edit mode, a user can designate an area of an additional text block preferred by the user by dragging 1120 the additional text block from a start point of the additional text block. Hence, for instance, as shown in FIG. 11 (b), a user can store not only a legacy text block 1111 but also a newly added text block 1112 in a clipboard at the same time.

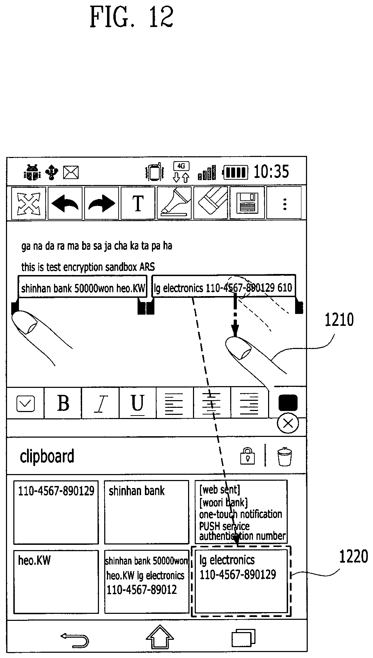

FIG. 12 is a diagram illustrating an example of copying a plurality of predetermined text blocks using a mobile terminal according to one embodiment of the present invention. In the previous drawings, a process of setting a plurality of text blocks is mainly explained. In addition, it is also explained that a plurality of the text blocks can be automatically stored in a clipboard.

Yet, if there exists a specific command, a text block can be limitedly stored in the clipboard. This also corresponds to one characteristic of the present invention. As shown in FIG. 12, if a plurality of text blocks are generated, a space 1220 dedicated to a plurality of the text blocks is generated in a clipboard. In this instance, if a specific text block is dragged 1210 in down direction, the specific text block is copied to the dedicated space 1220.

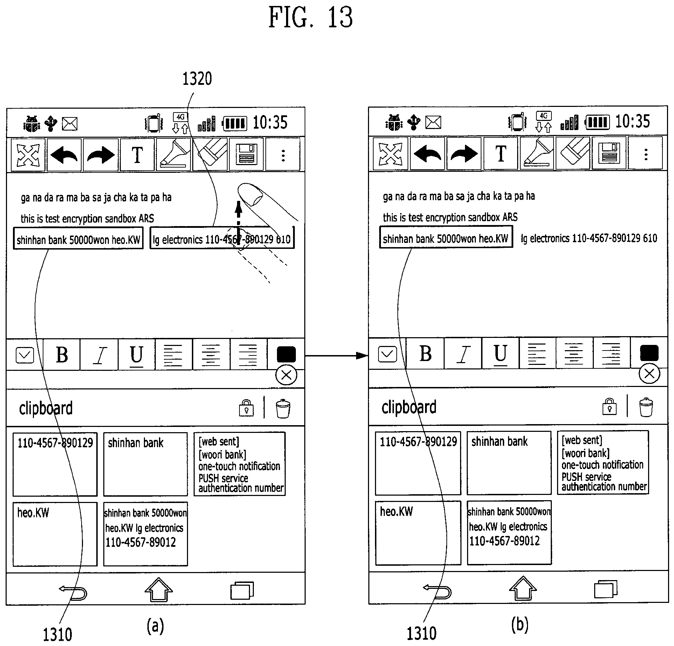

FIG. 13 is a diagram illustrating an example of cancelling a plurality of predetermined text blocks using a mobile terminal according to one embodiment of the present invention. As mentioned earlier with reference to the previous drawings, various embodiments designating a plurality of blocks and storing a plurality of the blocks have been explained.

Meanwhile, FIG. 13 shows a process of cancelling at least one or more blocks among a plurality of set blocks. First of all, as shown in FIG. 13 (a), assume that a plurality of text blocks 1310/1320 are set. In this instance, if a specific text block 1320 is dragged in up direction, as shown in FIG. 13 (b), a set text block 1310 maintains the setting status only and the text block dragged in up direction is cancelled.

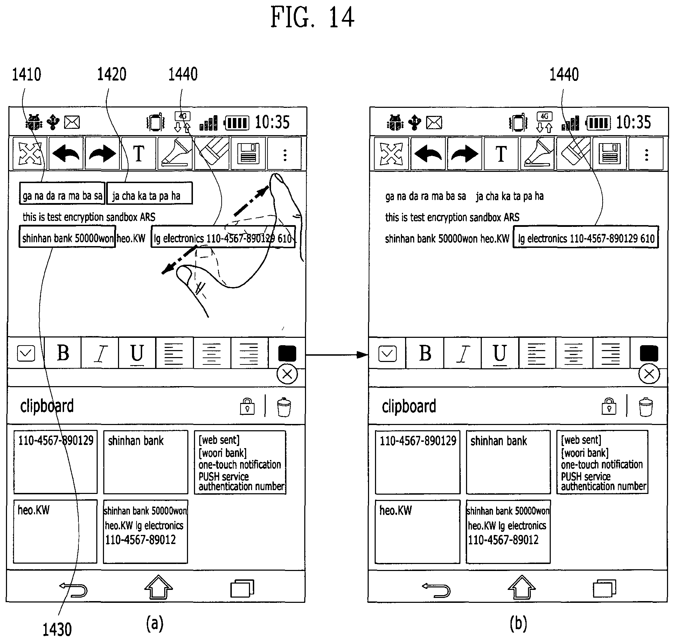

FIG. 14 is a diagram illustrating a different example of cancelling a plurality of predetermined text blocks using a mobile terminal according to one embodiment of the present invention. As shown in FIG. 14 (a), assume that there are four set text blocks 1410/1420/1430/1440. In this instance, if a user intends to cancel 3 text blocks out of four text blocks, it may have a problem in that it is necessary to perform dragging three times according to the embodiment mentioned earlier in FIG. 13. Hence, as shown in FIG. 14 (a), if a user performs a specific touch command (e.g., pinch to zoom) on a specific text block 1440 of which the user intends to select, the rest of three blocks except the selected block 1440 are cancelled as shown in FIG. 14 (b).

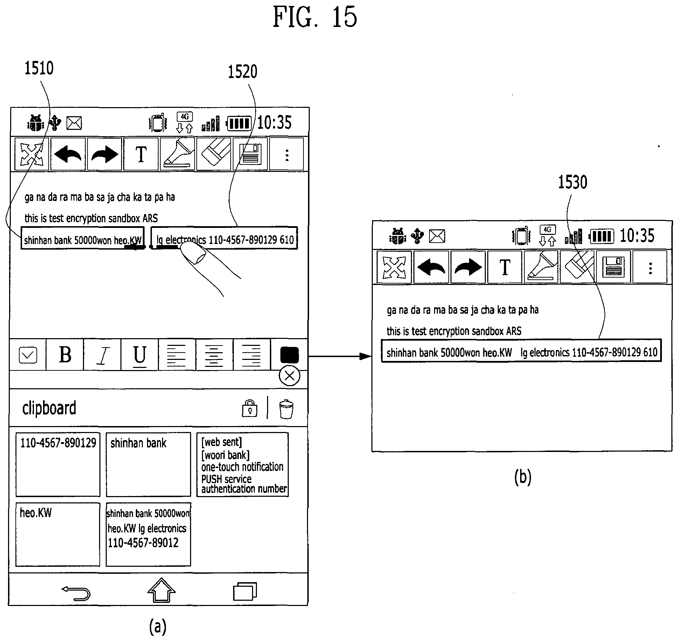

FIG. 15 is a diagram illustrating an example of merging a plurality of predetermined text blocks with each other using a mobile terminal according to one embodiment of the present invention. According to one embodiment of the present invention, it can not only designate a plurality of text blocks but also edit a plurality of the text blocks.

As shown in FIG. 15 (a), assume that a first text block 1510 and a second text block 1520 are set. In this instance, as shown in FIG. 15 (a), if a user selects the second block 1520 and drags the second block to a different text block (i.e., the first text block 1510), as shown in FIG. 15 (b), the first and the second text block are merged with each other to make a single text block 1530.

FIG. 16 is a diagram illustrating a different example of merging a plurality of predetermined text blocks with each other using a mobile terminal according to one embodiment of the present invention. Unlike FIG. 15, FIG. 16 shows a method that a plurality of text blocks share a part of text with each other. As shown in FIG. 16 (a), a first text block 1610 and a second text block 1620 are set in a manner that the first text block 1610 and the second text block 1620 are not overlapped with each other.

Yet, there may exist a need of a user to share a partial text only. A solution to satisfy the need of the user is shown in FIG. 16.

For instance, as shown in FIG. 16 (a), if an indicator indicating an end point of the first text block 1610 is moved to such a text as "Ig electronics," as shown in FIG. 16 (b), both the first text block 1630 and the second text block 1640 are able to share the text "Ig electronics." In particular, the first text block 1630 consists of such a text as "shinhan bank 50000won heokyoungwoo Ig electronics," On the contrary, the second text block 1640 consists of such a text as "Ig electronics 110-4567-8790129."

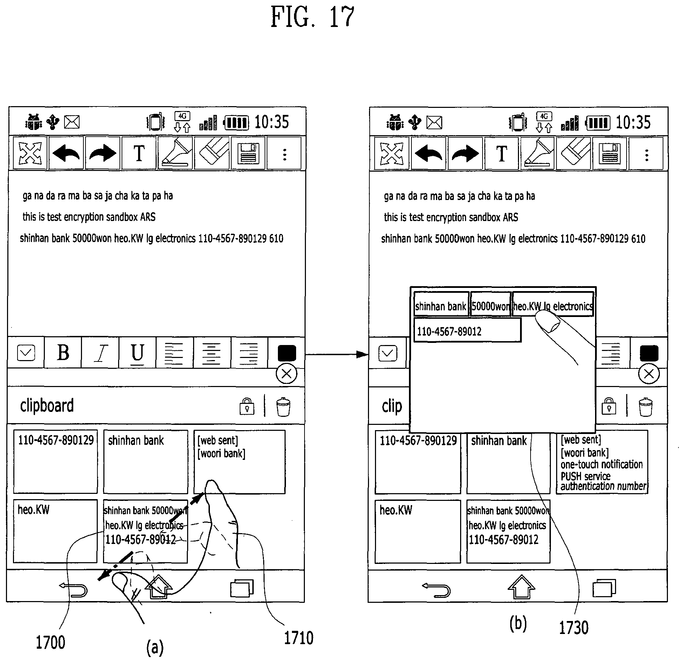

FIG. 17 is a diagram illustrating an example of editing a text in a clipboard using a mobile terminal according to one embodiment of the present invention. According to a related art, there is a problem in that a text stored in a clipboard is unable to be edited at all. FIG. 17 proposes a solution to solve the aforementioned problem.

As shown in FIG. 17 (a), if there is a specific command (e.g., pinch to zoom) on a random text area 1700 of a clipboard, as shown in FIG. 17 (b), a mode is switched to a mode 1730 capable of editing text in the clipboard. In particular, as shown in FIG. 17 (b), if a format stored in the clipboard is designed by a text block unit, a user may arbitrarily change an order of a text block and may edit the text blocks in the clipboard very quickly.

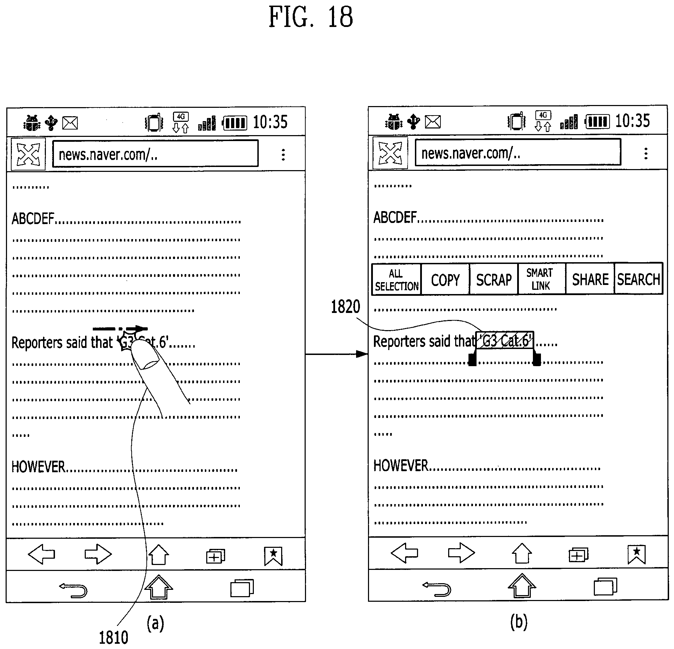

FIG. 18 is a diagram illustrating an example of setting a text block using the third sensing technology using a mobile terminal according to one embodiment of the present invention. According to a related art, a user can designate a text block by clicking (long click) the text block using a palm (finger). Yet, according to a different embodiment of the present invention, a text block can be generated by recognizing such a part as the back of a hand (nail) and the like instead of a finger. As shown in FIG. 18 (a), if a nail drags such characters as 'G3 Cat. 6,' which is to be designated as a text block, from a first character 1810, as shown in FIG. 18 (b), a text block 1820 is automatically generated.

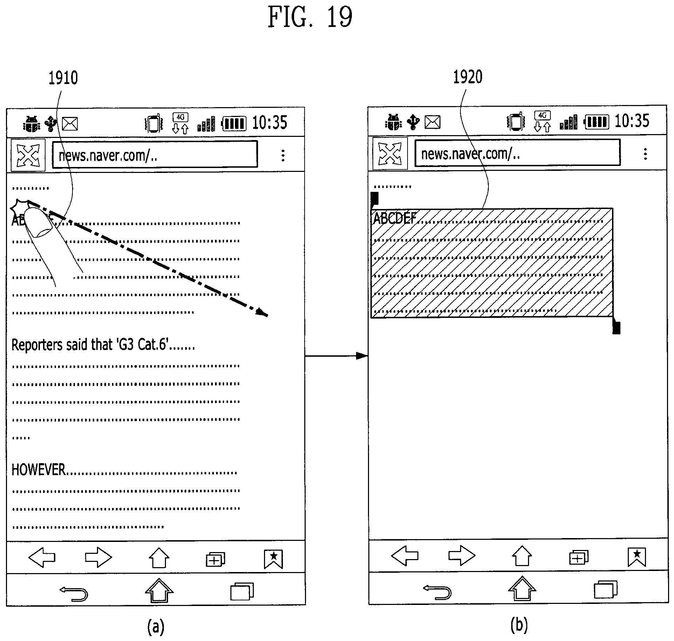

FIG. 19 is a diagram illustrating a different example of setting a text block using the third sensing technology using a mobile terminal according to one embodiment of the present invention. As shown in FIG. 19 (a), if a start point and an end point of a paragraph, which is to be designated as a text block, are dragged 1910 by a nail, as shown in FIG. 19 (b), a text block 1920 including the whole of the paragraph is automatically generated, thereby reducing text block setting time.

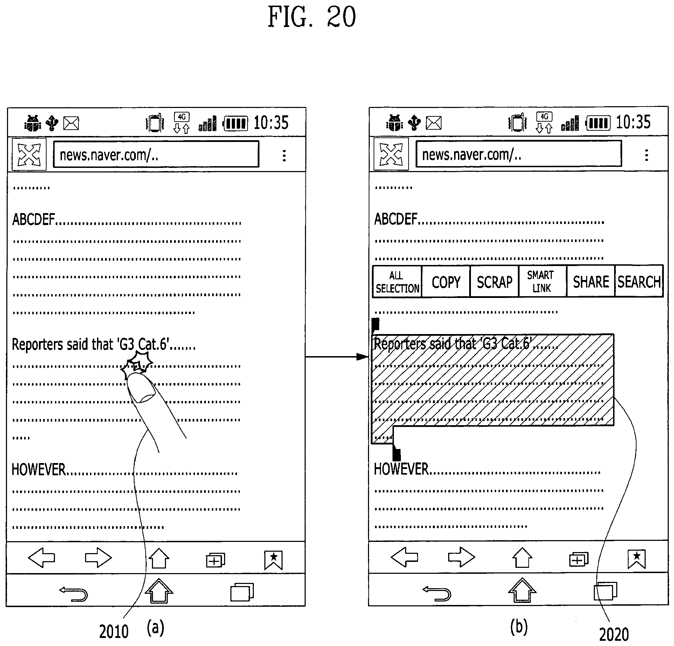

FIG. 20 is a diagram illustrating a further different example of setting a text block using the third sensing technology using a mobile terminal according to one embodiment of the present invention. As shown in FIG. 20 (a), if a random point of a paragraph, which is to be designate as a text block is double clicked 2010 by a nail, as shown in FIG. 20 (b), a text block 2020 including the whole of the paragraph is automatically generated, thereby reducing text block setting time.

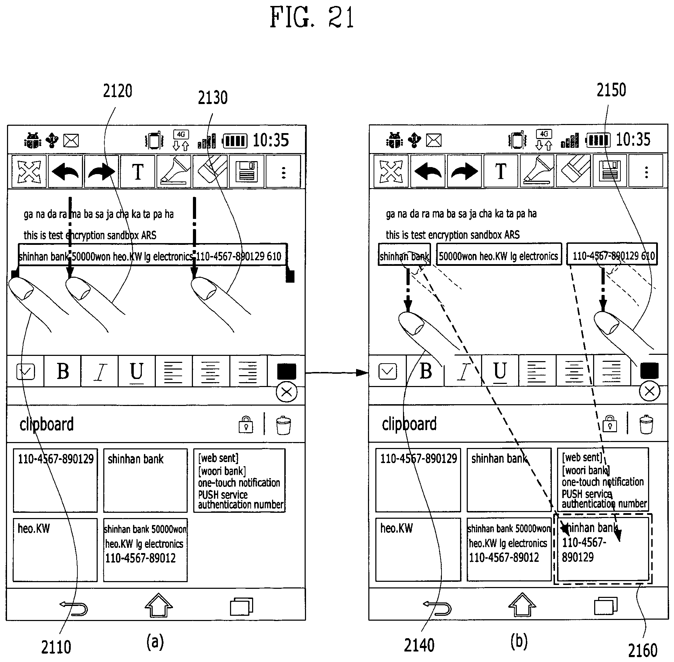

FIG. 21 is a diagram illustrating an example of a process of copying a plurality of text blocks to a clipboard using a mobile terminal according to one embodiment of the present invention. In FIG. 21, previously explained embodiments are explained by being put together. First of all, as shown in FIG. 21 (a), if an indicator indicating a start point of a text block is clicked 2110 for more than a predetermined time, a mode is switched to an edit mode. After the mode is switched to the edit mode, if dragging 2120/2130 in a down direction is performed on points of the text block where a user wants to divide, the text block is divided into three text blocks.

Moreover, as shown in FIG. 21 (b), if a user drags 2140/2150 two text blocks only among the three text blocks in a down direction to store the two text blocks in a clipboard, the two text blocks are stored in a temporary storing space 2160 of the clipboard. In particular, a text block, which is not dragged, is designed not to be stored in the clipboard.

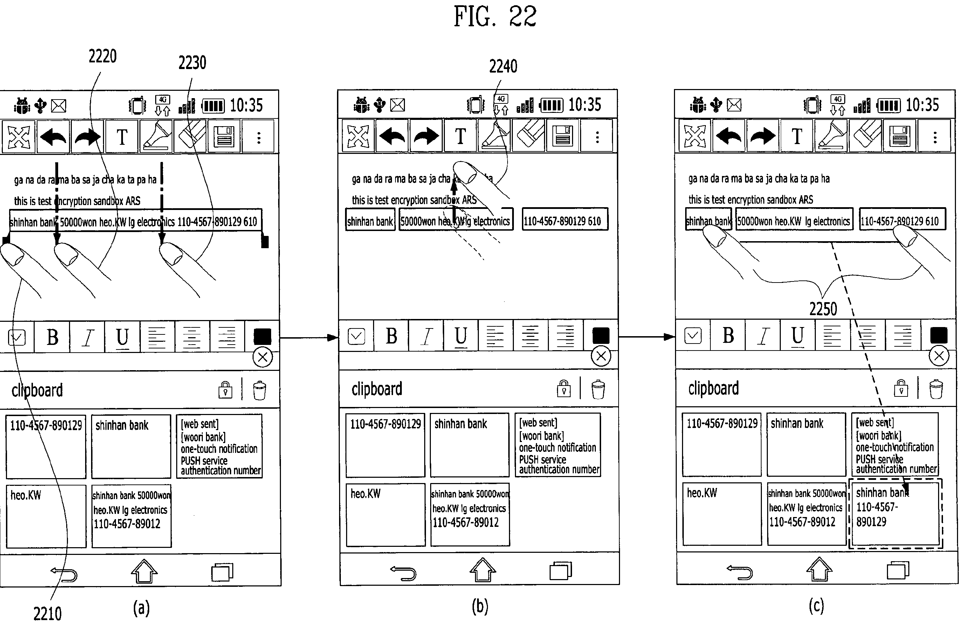

FIG. 22 is a diagram illustrating a different example of a process of copying a plurality of text blocks to a clipboard using a mobile terminal according to one embodiment of the present invention. In FIG. 22, previously explained embodiments are explained by being put together.

First of all, as shown in FIG. 22 (a), if an indicator indicating a start point of a text block is clicked 2210 for more than a predetermined time, a mode is switched to an edit mode. After the mode is switched to the edit mode, if dragging 2220/2230 in a down direction is performed on points of the text block where a user wants to divide, the text block is divided into three text blocks. Meanwhile, as shown in FIG. 22 (b), if a specific text block is dragged 2240 in up direction, the specific text block is cancelled. Moreover, as shown in FIG. 22 (c), if the rest of two text blocks are dragged 2250 only in down direction, the two text blocks are stored in a temporary storing space of a clipboard.

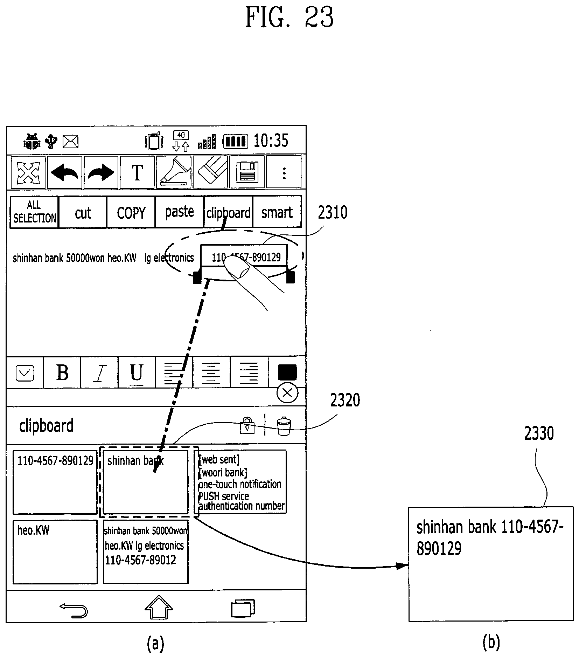

FIG. 23 is a diagram illustrating an example of a process of merging a text block with a text previously stored in a clipboard using a mobile terminal according to one embodiment of the present invention. As shown in FIG. 23 (a), assume that a predetermined text block 2310 is dragged to a random storing space 2320 of a clipboard. In this instance, as shown in FIG. 23 (b), a new text block 2330 can be designed to be generated in a manner that a text previously stored in the storing space 2320 is merged with the dragged text in sequence.

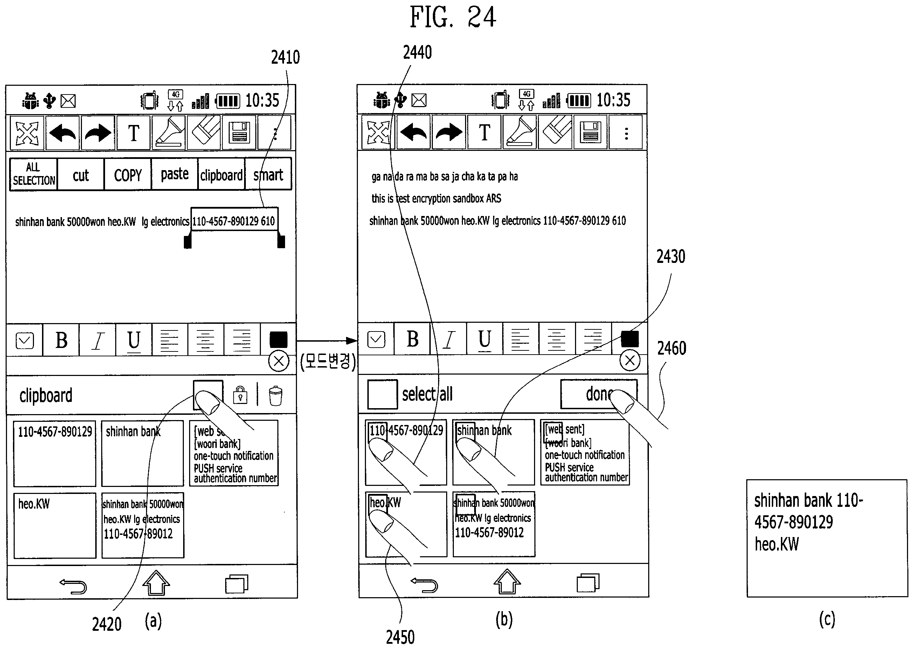

FIG. 24 is a diagram illustrating an example of a process of merging text stored in a clipboard with each other using a mobile terminal according to one embodiment of the present invention. In the following, a process of generating one text from a plurality of text stored in a clipboard is explained with reference to FIG. 24.

As shown in FIG. 24 (a), there exist a plurality of text in the clipboard. Yet, according to a related art, a technology of merging a plurality of the text in the clipboard with each other or a technology of editing a plurality of the text in the clipboard is not provided. First of all, assume that a specific option 2420 shown in FIG. 24 is selected. The specific option 2420 provides a user with a function of merging at least one or more text in the clipboard with each other.

For instance, if the specific option 2420 is selected, a state of the clipboard is changed to an active state capable of selecting the text in the clipboard. As shown in FIG. 24 (b), assume that a "done" option 2460 is selected after a "shinhan bank" text 2430, a "110-4567-890129" text 2440 and a "heokyoungwoo" text 2450 are selected in sequence. Hence, as shown in FIG. 24 (c), a new text block including "shinhan bank 110-4567-890129 heokyoungwoo" is stored in the clipboard according to the order of selection.

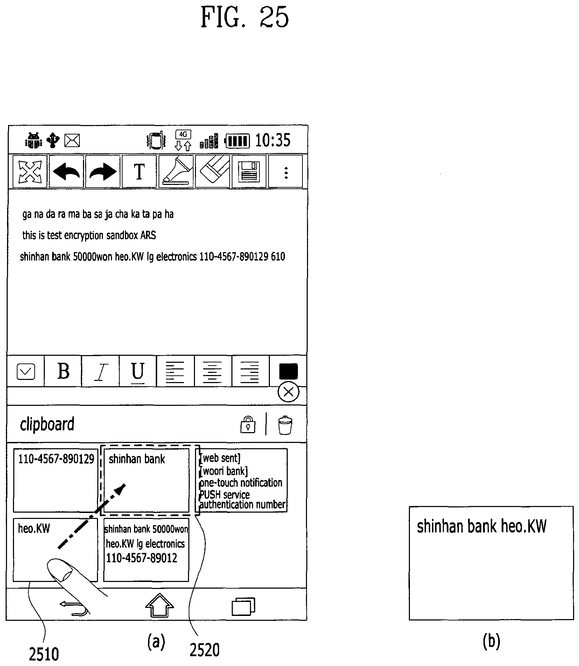

FIG. 25 is a diagram illustrating a different example of a process of merging text stored in a clipboard with each other using a mobile terminal according to one embodiment of the present invention. As shown in FIG. 25 (a), if a first text block 2510 in a clipboard is dragged to a second text block 2520, as shown in FIG. 25 (b), a new text block including both the first text block and the second text block is generated.

For instance, a text of a dragged text block can be designed to be positioned at a fore part in a new text block. Or, a text of a dragged text block can be designed to be positioned at a latter part in a new text block. This also belongs to the scope of right of the present invention. Moreover, as a further different embodiment, providing a GUI capable of selecting a text, which is designed to be positioned at a fore part of a merged text, also belongs to the scope of right of the present invention.

FIG. 26 is a diagram illustrating explaining a technology selectively providing a part of text only among the text stored in a clipboard according to a predetermined mode (or application) using a mobile terminal according to one embodiment of the present invention. According a different embodiment of the present invention, when a relevant application is executed or a relevant mode is executed, a block including a specific text can be preferentially recommended by analyzing text stored in a clipboard.

As shown in FIG. 26, an address-related text block 2610 is designed to be preferentially displayed or highlighted when a map application or a navigation application is executed. Moreover, as shown in FIG. 26, an account number-related text block 2620 is designed to be preferentially displayed or highlighted when a bank-related application is executed.

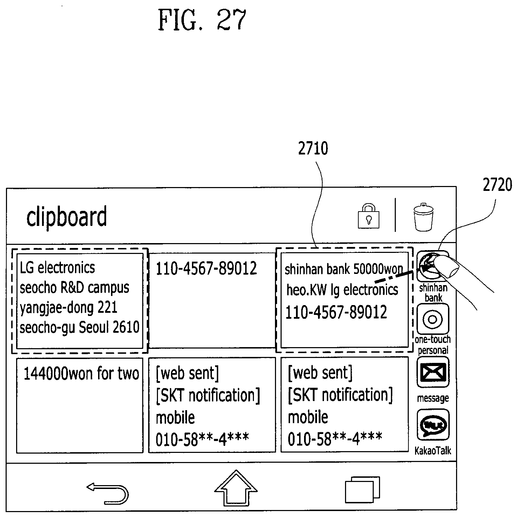

FIGS. 27 to 30 are diagrams illustrating embodiments that implement the technology explained in FIG. 26. As shown in FIG. 27, if a specific text block 2710 in a clipboard is selected, an application 2720 associated with the specific text block 2710 is automatically executed.

Or, if a specific text block 2710 in a clipboard is selected, an application 2720 associated with the specific text block 2710 is displayed on the top. Or, if a specific text block 2710 in a clipboard is selected, an application 2720 associated with the specific text block 2710 is designed to be displayed on a position nearest from the specific text block 2710.

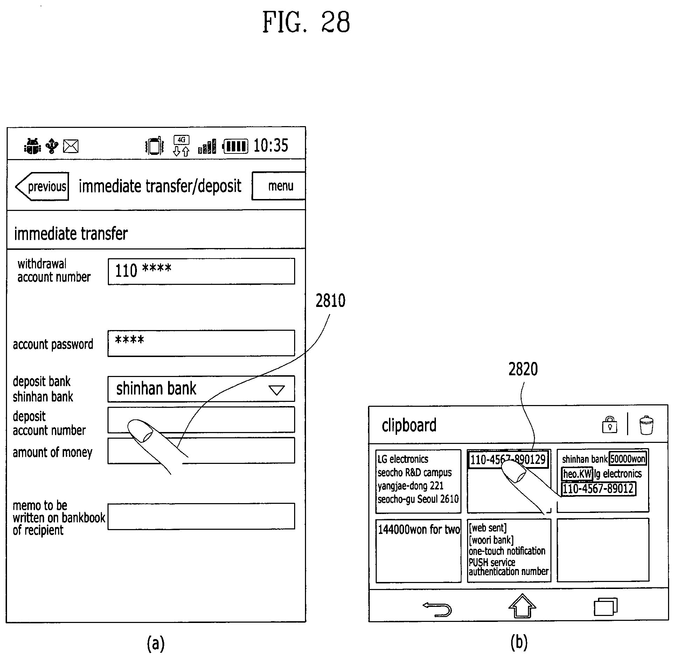

FIG. 28 (a) assumes a case that the specific application (bank-related) mentioned earlier in FIG. 27 is executed. As shown in FIG. 28 (a), if an input window 2810 is selected, a clipboard shown in FIG. 28 (b) is output. In particular, as shown in FIG. 28 (b), text blocks associated with the specific application (bank) are designed to be displayed by being highlighted. For instance, text such as an account number associated with a banking application, amount of money, name and the like are automatically processed as blocks. By doing so, a user may reduce an error selecting an unnecessary text.

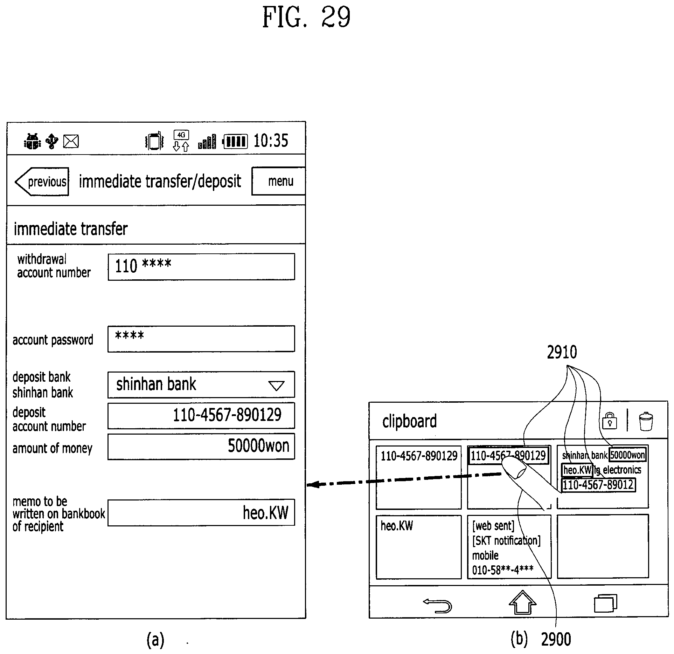

FIG. 29 assumes what is mentioned earlier in FIG. 28. As shown in FIG. 29 (b), if a random block among a plurality of blocks 2910 is touched 2900 for more than a predetermined time, color of a plurality of the blocks is changed. In particular, the highlighted blocks shown in FIG. 28 (b) indicate that the highlighted blocks are simply recommended to a user. On the contrary, a plurality of the blocks highlighted by a different color shown in FIG. 29 (b) indicate that a user will definitely use all of a plurality of the blocks.

Moreover, in FIG. 29 (b), if all blocks are dragged to an input window of the banking application while being selected, as shown in FIG. 29 (a), each of text automatically moves to the input window in accordance with an account number, amount of money and name. Hence, a user does not need to individually drag each of the text.

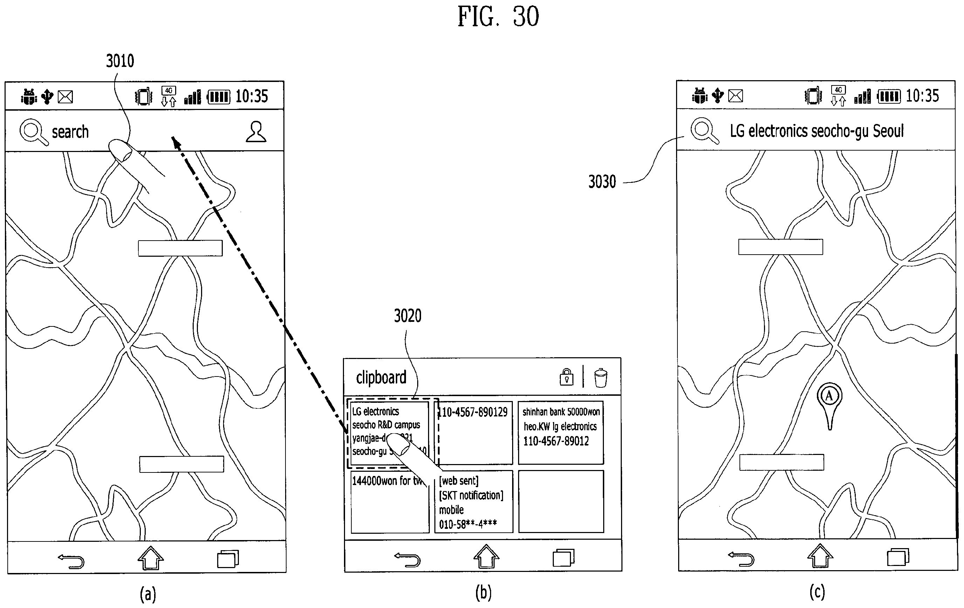

The previous drawings are explained under an assumption that a bank-related application is executing. On the contrary,. FIG. 30 assumes that a map-related application is executing. As shown in FIG. 30 (a), if a search window is selected 3010 while a map-related web site or a map-related application is executing, as shown in FIG. 30 (b), an address-related text block 3020 in a clipboard is highlighted.

As mentioned earlier in FIG. 29, if a plurality of address-related text blocks are stored in the clipboard, a plurality of the address-related text blocks can be designed to be automatically dragged to the search window by a long click (touching more than a predetermined time). This may also belong to the scope of right of the present invention.

Hence, if a highlighted text block shown in FIG. 30 (b) is dragged to a search window shown in FIG. 30 (a), as shown in FIG. 30 (c), the highlighted text block is automatically input to the search window. Hence, a user does not need to use a separate copy function.

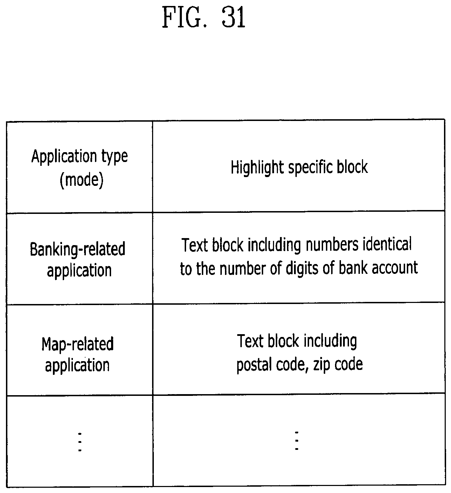

FIG. 31 is a diagram of database necessary for implementing the technology explained in FIG. 26. In order to implement the embodiments mentioned earlier in FIG. 26 to FIG. 30, it is necessary to store a specific application (mode) and a specific text in a memory by mapping the specific application (mode) and the specific text with each other. For instance, database shown in FIG. 31 can be stored in the memory.

A text block, which includes contiguous numbers identical to the number of digits of a bank account number, is designed to be recommended or highlighted as top priority when using a banking-related application. Moreover, if a bank account number varies according to each bank, an A bank account number-related text (e.g., consisting of 10 digits) is designed to be recommended when executing an A bank-related application and a B bank account number-related text (e.g., consisting of 13 digits) is designed to be recommended when executing a B bank-related application. Of course, making a user directly set the aforementioned mapping may also belong to a different scope of right of the present invention. Meanwhile, a text block including a postal code/ZIP code is designed to be recommended or highlighted as top priority when using a map-related application.

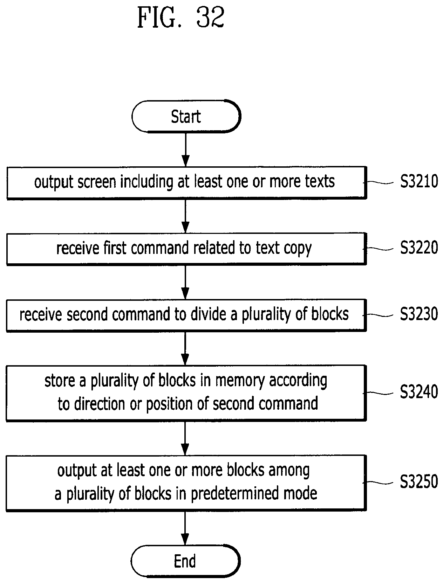

FIG. 32 is a flowchart for a method of controlling a mobile terminal according to one embodiment of the present invention. Those who skilled in the art can complementally interpret FIG. 32 with reference to the previously explained drawings.

A mobile terminal according to one embodiment of the present invention outputs a screen including at least one or more text (S3210), receives a first command configured to copy at least one or more text of the screen (S3220) and receives a second command configured to divide the at least one or more text to be copied into a plurality of blocks (S3230). For instance, the first command corresponds to a case that an indicator is touched for more than a predetermined time. As mentioned in the foregoing description, the second command corresponds to one of various embodiments generating a plurality of blocks.

Moreover, the mobile terminal stores a plurality of divided blocks in a memory based on at least one of a position of the received second command and a direction of the received second command (S3240). The mobile terminal controls at least one or more blocks among a plurality of the blocks to be output on the screen in a predetermined mode (S3250).

According to a different embodiment of the present invention, although it is not depicted in FIG. 32, the method of controlling the mobile terminal further includes the steps of recognizing a dragged position of the received second command and a direction of the received second command and identifying a plurality of blocks on the basis of the recognized position. Moreover, if the first command is received, the method can further include the steps of highlighting a block including at least one or more text and displaying a plurality of indicators respectively indicating a start point and an end point of the highlighted block. This also belongs to a different scope of right of the present invention.

According to a further different embodiment of the present invention, if it is recognized that one of the indicators is touched for more than a predetermined time, the method further includes the steps of displaying a plurality of blocks adjacent to a first block according to the first command in a list form (or highlight form) and selecting a specific block from a plurality of the blocks as a second block based on the second command. Moreover, the method can further include the steps of receiving a third command configured to make a part of text included in the first block to be included in the second block and storing the first block and the second block, which are sharing a part of text with each other, in the memory, respectively. This also belongs to a different scope of right of the present invention. As mentioned earlier in FIG. 16, more specifically, the third command corresponds to a drag touch signal for an area shared by two text blocks.

Although it is not depicted in FIG. 32, the controlling step (S3250) further includes the steps of analyzing a currently executed mode, analyzing text included in the blocks, which is stored in the memory, and displaying blocks including a text mapped to the analyzed mode only or preferentially displaying the blocks including the text mapped to the analyzed mode according to a result of the analysis. Regarding this, it is sufficiently mentioned earlier in FIG. 26 to FIG. 31.

According to at least one of embodiments, the present provides a mobile terminal capable of setting a plurality of text blocks on a clipboard at a time. A technology capable of more promptly processing a plurality of blocks is provided. In addition, a GUI (graphic user interface) capable of easily editing and rearranging a plurality of selected blocks is provided. A technology capable of limitedly loading a block including a specific text only in a specific mode (e.g., application) is further provided.

The present invention mentioned in the foregoing description can be implemented by codes readable by a computer in media in which a program is recorded. Media readable by a computer includes all kinds of recording devices in which data readable by a computer system is stored. Examples of the media readable by a computer include a HDD (hard disk drive), an SSD (solid state disk), an SDD (silicon disk drive), a ROM, a RAM, a CD-ROM, a magnetic tape, a floppy disk, an optical data storing device and the like. In addition, the media can be implemented in a form of a carrier wave (e.g., transmission via the internet). In addition, the computer may include a controller 180 of a terminal.

## Claims

1. A method of controlling a mobile terminal (100), the method comprising:
displaying, via a display unit (151) of the mobile terminal, a screen including text;
receiving, via a controller (180) of the mobile terminal, a first command copying at least a portion of the text displayed on the screen;
receiving, via the controller, a second command for dividing the portion of text into a plurality of text blocks, wherein the portion of text is selected based on the received first command;
storing, via a memory (170) associated with the mobile terminal, at least first and second text blocks included in the divided text blocks based on at least one of a position of the received second command and a direction of the received second command, the text blocks being stored mapped to respective specific executable applications;
displaying the at least first and second text blocks on the display unit,
executing a specific application;
analyzing the application currently being executed,
analyzing text contained in the text blocks which are stored in the memory, and
preferentially displaying any of those text blocks that are mapped to the application currently being executed.

2. The method of claim 1, further comprising:
identifying the at least first and second blocks based on a dragged position and a dragged direction of the received second command.

3. The method of claim 1, further comprising:
highlighting the at least first and second blocks; and
respectively displaying a plurality of indicators indicating a start point and an end point of the first and second highlighted blocks, respectively.

4. The method of claim 3, further comprising:
receiving a touch selection of one of the plurality of the indicators for more than a predetermined time;
displaying a plurality of blocks adjacent to the first block in a list form; and
receiving a selection of a specific block from the plurality of the blocks as the second block.

5. The method of claim 3, further comprising:
receiving a touch selection of one of the plurality of the indicators for more than a predetermined time;
displaying a plurality of blocks adjacent to the first block in a highlighted form; and
receiving a selection of a specific block from the plurality of the blocks as the second block.

6. The method of claim 3, further comprising:
receiving a third command for making a part of text contained in the first block to be contained in the second block; and
storing the first block and the second block with the part of the text.

7. The method of claim 1, further comprising:
executing an editing mode;
displaying all blocks stored in the memory by recognizing all of the blocks as a single block; and
displaying all blocks stored in the memory by individually recognizing all of the blocks.

8. The method of claim 1, further comprising:
analyzing a currently executed application;
analyzing text contained in blocks, which are stored in the memory; and
displaying blocks containing a text mapped to the analyzed application only according to a result of the analysis.

9. A mobile terminal (100), comprising:
a display unit (151) configured to display a screen including text; and
a controller (180) configured to:
receive a first command copying at least a portion of text displayed on the screen,
receive a second command for dividing the portion of text to be copied into a plurality of text blocks, wherein the portion of text is selected based on the received first command,
store at least first and second text blocks included in the divided text blocks in a memory (170) based on at least one of a position of the received second command and a direction of the received second command, the text blocks being stored mapped to respective specific executable applications, and
display the at least first and second text blocks on the display unit,
execute a specific application;
analyze the application currently being executed,
analyze text contained in the text blocks which are stored in the memory, and
preferentially display any of those text blocks that are mapped to the application currently being executed.

10. The mobile terminal of claim 9, wherein the controller is further configured to:
identify the at least first and second blocks based on a dragged position and a dragged direction of the received second command.

11. The mobile terminal of claim 9, wherein the controller is further configured to:
highlight the at least first and second blocks, and
respectively display a plurality of indicators indicating a start point and an end point of the first and second highlighted blocks, respectively.

12. The mobile terminal of claim 11, wherein the controller is further configured to:
receive a touch selection of one of the plurality of the indicators for more than a predetermined time,
display a plurality of blocks adjacent to the first block in a list form, and
receive a selection of a specific block from the plurality of the blocks as the second block.

13. The mobile terminal of claim 11, wherein the controller is further configured to:
receive a touch selection of one of the plurality of the indicators for more than a predetermined time,
display a plurality of blocks adjacent to the first block in a highlighted form, and
receive a selection of a specific block from the plurality of the blocks as the second block.

## Patentansprüche

1. Verfahren zum Steuern eines mobilen Endgeräts (100), wobei das Verfahren umfasst:
Anzeigen eines Bildschirms mit Text durch eine Anzeigeeinheit (151) des mobilen Endgeräts,
Empfangen, mittels einer Steuereinheit (180) des mobilen Endgeräts, eines ersten Befehls, der zumindest einen Teil des auf dem Bildschirm dargestellten Textes kopiert,
Empfangen, mittels der Steuereinheit, eines zweiten Befehls zum Teilen des Teils des Textes in mehrere Textblöcke, wobei der Teil des Textes ausgewählt wird basierend auf dem empfangenen ersten Befehl,
Speichern, mittels eines dem mobilen Endgerät zugehörigen Speichers (170), zumindest erster und zweiter in den aufgeteilten Textblöcken enthaltener Textblöcke basierend auf einer Position des empfangenen zweiten Befehls und/oder einer Richtung des empfangenen zweiten Befehls, wobei die Textblöcke entsprechenden bestimmten ausführbaren Anwendungen zugeordnet gespeichert werden,
Anzeigen der zumindest ersten und zweiten Textblöcke auf der Anzeigeeinheit,
Ausführen einer bestimmten Anwendung,
Analysieren der aktuell ausgeführten Anwendung,
Analysieren des in den Textblöcken, die in dem Speicher gespeichert sind, enthaltenen Textes, und
vorzugsweises Anzeigen jeglicher solcher Textblöcke, die der aktuell ausgeführten Anwendung zugeordnet sind.

2. Verfahren nach Anspruch 1, ferner umfassend:
Identifizieren der zumindest ersten und zweiten Textblöcke basierend auf einer gezogenen Position und einer gezogenen Richtung des empfangenen zweiten Befehls.

3. Verfahren nach Anspruch 1, ferner umfassend:
Hervorheben der zumindest ersten und zweiten Textblöcke, und
jeweils Anzeigen mehrerer Indikatoren, die einen Startpunkt und einen Endpunkt der ersten bzw. zweiten hervorgehobenen Blöcke anzeigen.

4. Verfahren nach Anspruch 3, ferner umfassend:
Empfangen einer Berührungsauswahl eines der mehreren der Indikatoren für mehr als eine vorbestimmte Zeit,
Anzeigen mehrerer Blöcke neben dem ersten Block in einer Listenform, und
Empfangen einer Auswahl eines bestimmten Blocks aus den mehreren Blöcken als den zweiten Block.

5. Verfahren nach Anspruch 3, ferner umfassend:
Empfangen einer Berührungsauswahl eines der mehreren der Indikatoren für mehr als eine vorbestimmte Zeit,
Anzeigen mehrerer Blöcke neben dem ersten Block in hervorgehobener Form, und
Empfangen einer Auswahl eines bestimmten Blocks aus den mehreren Blöcken als den zweiten Block.

6. Verfahren nach Anspruch 3, ferner umfassend:
Empfangen eines dritten Befehls, um einen in dem ersten Block enthaltenen Text in dem zweiten Block enthalten sein zu lassen, und
Speichern des ersten Blocks und des zweiten Blocks mit dem Teil des Textes.

7. Verfahren nach Anspruch 1, ferner umfassend:
Ausführen eines Editiermodus,
Anzeigen aller in dem Speicher gespeicherter Blöcke durch Erkennen aller der Blöcke als einen einzigen Block, und
Anzeigen aller in dem Speicher gespeicherter Blöcke durch individuelles Erkennen aller der Blöcke.

8. Verfahren nach Anspruch 1, ferner umfassend:
Analysieren einer aktuell ausgeführten Anwendung,
Analysieren von Text, der in Blöcken enthalten ist, welche in dem Speicher gespeichert sind, und
Anzeigen von einen Text enthaltenden Blöcken der analysierten Anwendung zugeordnet nur entsprechend einem Resultat der Analyse.

9. Mobiles Endgerät (100), mit:
einer Anzeigeeinheit (151), die dazu eingerichtet ist, einen Bildschirm mit Text anzuzeigen, und
einer Steuereinheit (180), die eingerichtet ist zum:
Empfangen eines ersten Befehls, der wenigstens einen Teil des auf dem Bildschirm angezeigten Textes kopiert,
Empfangen eines zweiten Befehls zum Teilen des Teils des Textes, der in mehrere Textblöcke kopiert werden soll, wobei der Teil des Textes ausgewählt ist basierend auf dem empfangenen ersten Befehl,
Speichern zumindest erster und zweiter in den aufgeteilten Textblöcken enthaltener Textblöcke in einem Speicher (170) basierend auf einer Position des empfangenen zweiten Befehls und/oder einer Richtung des empfangenen zweiten Befehls, wobei die Textblöcke entsprechenden bestimmten ausführbaren Anwendungen zugeordnet gespeichert werden, und
Anzeigen der zumindest ersten und zweiten Textblöcke auf der Anzeigeeinheit,
Ausführen einer bestimmten Anwendung,
Analysieren der aktuell ausgeführten Anwendung,
Analysieren des in den Textblöcken, die in dem Speicher gespeichert sind, enthaltenen Textes und vorzugsweises Anzeigen jeglicher solcher Textblöcke, die der Anwendung zugeordnet sind, welche aktuell ausgeführt wird.

10. Mobiles Endgerät nach Anspruch 9, wobei die Steuereinheit ferner eingerichtet ist zum:
Identifizieren der zumindest ersten und zweiten Textblöcke basierend auf einer gezogenen Position und einer gezogenen Richtung des empfangenen zweiten Befehls.

11. Mobiles Endgerät nach Anspruch 9, wobei die Steuereinheit ferner eingerichtet ist zum:
Hervorheben der zumindest ersten und zweiten Textblöcke, und
entsprechendes Anzeigen mehrerer Indikatoren, die einen Startpunkt und einen Endpunkt der ersten bzw. zweiten hervorgehobenen Blöcke angeben.

12. Mobiles Endgerät nach Anspruch 11, wobei die Steuereinheit ferner eingerichtet ist zum:
Empfangen einer Berührungsauswahl eines der mehreren der Indikatoren für mehr als eine vorbestimmte Zeit,
Anzeigen mehrerer Blöcke neben dem ersten Block in einer Listenform,
Empfangen einer Auswahl eines bestimmten Blocks aus den mehreren der Blöcke als den zweiten Block.

13. Mobiles Endgerät nach Anspruch 11, wobei die Steuereinheit ferner eingerichtet ist zum:
Empfangen einer Berührungsauswahl eines der mehreren der Indikatoren für mehr als eine vorbestimmte Zeit,
Anzeigen mehrerer Blöcke neben dem ersten Block in hervorgehobener Form, und
Empfangen einer Auswahl eines bestimmten Blocks der mehreren der Blöcke als den zweiten Block.

## Revendications

1. Procédé de commande d'un terminal mobile (100), le procédé comprenant les étapes consistant à:
afficher, via une unité d'affichage (151) du terminal mobile, un écran incluant du texte;
recevoir, via un contrôleur (180) du terminal mobile, une première commande copiant au moins une partie du texte affiché sur l'écran;
recevoir, via le contrôleur, une deuxième commande destinée à diviser la partie de texte en une pluralité de blocs de texte, dans lequel la partie de texte est sélectionnée sur la base de la première commande reçue;
mémoriser, via une mémoire (170) associée au terminal mobile, au moins les premier et deuxième blocs de texte contenus dans les blocs de texte divisés sur la base d'au moins l'une parmi une position de la deuxième commande reçue et une direction de la deuxième commande reçue, les blocs de texte étant mémorisés en correspondance avec des applications exécutables spécifiques respectives;
afficher les au moins premier et deuxième blocs de texte sur l'unité d'affichage,
exécuter une application spécifique;
analyser l'application actuellement en cours d'exécution,
analyser le texte contenu dans les blocs de textes qui sont mémorisés dans la mémoire, et
afficher préférentiellement l'un quelconque de ces blocs de texte qui sont mappés à l'application en cours d'exécution.

2. Procédé selon la revendication 1, comprenant en outre l'étape consistant à:
identifier les au moins premier et deuxième blocs sur la base d'une position glissée et d'une direction de glissement de la deuxième commande reçue.

3. Procédé selon la revendication 1, comprenant en outre les étapes consistant à:
mettre en évidence les au moins premier et deuxième blocs; et
afficher respectivement une pluralité d'indicateurs indiquant un point de début et un point de fin des premier et deuxième blocs mis en évidence, respectivement.

4. Procédé selon la revendication 3, comprenant en outre les étapes consistant à:
recevoir une sélection tactile de l'un parmi la pluralité d'indicateurs pendant plus d'un temps prédéterminé;
afficher une pluralité de blocs adjacents au premier bloc sous forme de liste; et
recevoir une sélection d'un bloc spécifique à partir de la pluralité de blocs en tant que deuxième bloc.

5. Procédé selon la revendication 3, comprenant en outre les étapes consistant à:
recevoir une sélection tactile de l'un parmi la pluralité d'indicateurs pendant plus d'un temps prédéterminé;
afficher une pluralité de blocs adjacents au premier bloc sous forme mise en évidence; et
recevoir une sélection d'un bloc spécifique à partir de la pluralité de blocs en tant que deuxième bloc.

6. Procédé selon la revendication 3, comprenant en outre les étapes consistant à:
recevoir une troisième commande pour amener une partie du texte contenu dans le premier bloc à être contenue dans le deuxième bloc; et
mémoriser le premier bloc et le deuxième bloc avec la partie du texte.

7. Procédé selon la revendication 1, comprenant en outre les étapes consistant à:
exécuter un mode édition;
afficher tous les blocs mémorisés dans la mémoire en reconnaissant la totalité des blocs comme un bloc unique; et
afficher tous les blocs mémorisés dans la mémoire en reconnaissant individuellement la totalité des blocs.

8. Procédé selon la revendication 1, comprenant en outre les étapes consistant à:
analyser une application actuellement en cours d'exécution;
analyser le texte contenu dans les blocs, qui sont mémorisés dans la mémoire; et
afficher des blocs contenant un texte mis en correspondance avec l'application analysée uniquement en fonction d'un résultat de l'analyse.

9. Terminal mobile (100), comprenant:
une unité d'affichage (151) configurée pour afficher un écran incluant du texte; et
un contrôleur (180) configuré pour:
recevoir une première commande copiant au moins une partie du texte affiché sur l'écran;
recevoir une deuxième commande destinée à diviser la partie de texte à copier en une pluralité de blocs de texte, dans lequel la partie de texte est sélectionnée sur la base de la première commande reçue;
mémoriser au moins les premier et deuxième blocs de texte contenus dans les blocs de texte divisés dans une mémoire (170) sur la base d'au moins l'une parmi une position de la deuxième commande reçue et une direction de la deuxième commande reçue, les blocs de texte étant mémorisés en correspondance avec des applications exécutables spécifiques respectives, et
afficher les au moins premier et deuxième blocs de texte sur l'unité d'affichage,
exécuter une application spécifique;
analyser l'application actuellement en cours d'exécution,
analyser le texte contenu dans les blocs de textes qui sont mémorisés dans la mémoire, et
afficher préférentiellement l'un quelconque de ces blocs de texte qui sont mappés à l'application en cours d'exécution.

10. Terminal mobile selon la revendication 9, dans lequel le contrôleur est en outre configuré pour:
identifier les au moins premier et deuxième blocs sur la base d'une position glissée et d'une direction de glissement de la deuxième commande reçue.

11. Terminal mobile selon la revendication 9, dans lequel le contrôleur est en outre configuré pour:
mettre en évidence les au moins premier et deuxième blocs, et
afficher respectivement une pluralité d'indicateurs indiquant un point de début et un point de fin des premier et deuxième blocs mis en évidence, respectivement.

12. Terminal mobile selon la revendication 11, dans lequel le contrôleur est en outre configuré pour:
recevoir une sélection tactile de l'un parmi la pluralité d'indicateurs pendant plus d'un temps prédéterminé,
afficher une pluralité de blocs adjacents au premier bloc sous forme de liste, et
recevoir une sélection d'un bloc spécifique à partir de la pluralité de blocs en tant que deuxième bloc.

13. Terminal mobile selon la revendication 11, dans lequel le contrôleur est en outre configuré pour:
recevoir une sélection tactile de l'un parmi la pluralité d'indicateurs pendant plus d'un temps prédéterminé,
afficher une pluralité de blocs adjacents au premier bloc sous forme mise en évidence, et
recevoir une sélection d'un bloc spécifique à partir de la pluralité de blocs en tant que deuxième bloc.
